# EUROPEAN PATENT APPLICATION

(11) **EP 2 568 666 A1**
(43) Date of publication of application: **13.03.2013**
(21) Application number: 11864904.5
(22) Date of filing: 30.09.2011
(51) Int. Cl.: H04L 12/54

(54) **IP ADDRESS OBTAINING METHOD AND NETWORK ACCESS DEVICE**

(71) Applicant: Huawei Technologies Co., Ltd., Shenzhen, Guangdong 518129 (CN)
(72) Inventor: YU, Zhouyi, Shenzhen Guangdong 518129 (CN); FU, Tianfu, Shenzhen Guangdong 518129 (CN); LI, Yan, Shenzhen Guangdong 518129 (CN)
(74) Representative: Epping - Hermann - Fischer
(86) International application number: PCT/CN2011/080458
(87) International publication number: WO 2012/162996

(57) **Abstract**

Embodiments of the present invention relate to a method for acquiring an IP address and a network access device. The method includes: after receiving a first IP address acquiring message from a first network, assigning a first IP address to the first network by using a process and associating an identifier of the first network with a first session, so that the network access device is capable of mapping the first IP address to a first private network IP address and sending the same to the first network, thereby avoiding the problem of complex implementation in the prior art resulted from a process where a gateway configured for a family network or an enterprise network needs to initiate an IPoE dial-up process. In this way, the gateway configured for the family network or the enterprise network is simplified, operation and maintenance costs are reduced, and flat networks are further implemented.

## Description

### FIELD OF THE INVENTION

Embodiments of the present invention relate to communication technologies and, in particular, to a method for acquiring an IP address method and a network access device.

### BACKGROUND OF THE INVENTION

In current telecommunication networks, a gateway may be configured for each family network or an enterprise network for initiating an Internet Protocol over Ethernet (IPoE) dial-up process to a broadband remote access server (BRAS) or a Dynamic Host Configuration Protocol (DHCP) server to obtain an IP address of the family network or the enterprise network.

However, the implementation is complex because the gateway configured for the family network or the enterprise network needs to initiate an IPoE dial-up process, which increases operation and maintenance costs.

### SUMMARY OF THE INVENTION

Embodiments of the present invention provide a method for acquiring an IP address and a network access device for simplifying a gateway configured for a family network or an enterprise network, thereby reducing operation and maintenance costs.

In one aspect, a method for acquiring an IP address is provided, including:
receiving, by a network access device, a first IP address acquiring message from a first network, where the first IP address acquiring message includes an identifier of the first network;
creating, by the network access device, a first session for the first network by using a process, where the creating the first session includes assigning a first IP address to the first network and associating the identifier of the first network with the first session;
mapping, by the network access device, the first IP address to a first private network IP address; and
sending, by the network access device, the first private network IP address to the first network.

In another aspect, a network access device is provided, including:
a first receiving unit, configured to receive a first IP address acquiring message from a first network, where the first IP address acquiring message includes an identifier of the first network;
a first creating unit, configured to create a first session for the first network by using a process, where the creating the first session includes assigning a first IP address to the first network and associating the identifier of the first network with the first session;
a first mapping unit, configured to map the first IP address to a first private network IP address; and
a first sending unit, configured to send the first private network IP address to the first network.

Based on the technical solutions described above, the network access device according to embodiments of the present invention, after receiving the first IP address acquiring message from the first network, assigns the first IP address to the first network by using the process and associates the identifier of the first network with the first session, so that the network access device is capable of mapping the first IP address to the first private network IP address and sending the first private network IP address to the first network, thereby avoiding the problem of complex implementation in the prior art resulted from a process where a gateway configured for a family network or an enterprise network needs to initiate an IPoE dial-up process. In this way, the gateway configured for the family network or the enterprise network is simplified, operation and maintenance costs are reduced, and flat networks are implemented.

### BRIEF DESCRIPTION OF THE DRAWINGS

In order to illustrate the technical solutions in embodiments of the present invention or the prior art more clearly, accompanying drawings needed in the embodiments or the prior art are illustrated briefly below. It is evident that the accompanying drawings are only some exemplary embodiments of the present invention, and persons skilled in the art may derive other drawings according to the accompanying drawings without creative efforts.
FIG. 1 is a schematic flowchart of a method for acquiring an IP address according to an embodiment of the present invention;
FIG. 2 is a schematic flowchart of a method for acquiring an IP address according to another embodiment of the present invention;
FIG. 3 is a schematic structural diagram of a network access device according to another embodiment of the present invention;
FIG. 4 is a schematic structural diagram of a network access device according to another embodiment of the present invention; and
FIG. 5 is a schematic structural diagram of a network access device according to another embodiment of the present invention.

### DETAILED DESCRIPTION OF THE EMBODIMENTS

To make the objective, technical solutions, and advantages of embodiments of the present invention clearer, the technical solutions in the embodiments of the present invention are clearly and fully described as follows with reference to the accompanying drawings in the embodiments of the present invention. Obviously, the embodiments to be described are only exemplary ones rather than all of the embodiments of the present invention. Based on the embodiments of the present invention, all other embodiments obtained by persons skilled in the art without creative efforts shall fall within the protection scope of the present invention.

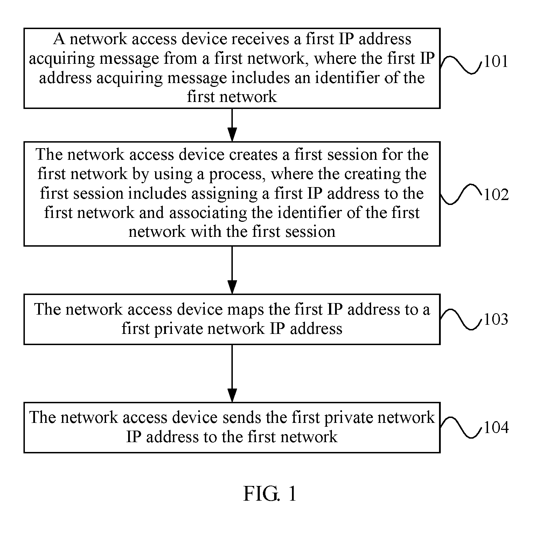

FIG. 1 is a schematic flowchart of a method for acquiring an IP address according to an embodiment of the present invention. As shown in FIG. 1, the method for acquiring an IP address according to this embodiment may include:
101. A network access device receives a first IP address acquiring message from a first network, where the first IP address acquiring message includes an identifier of the first network.

Wherein, the first network includes but is not limited to a family network or an enterprise network.

Specifically, the identifier of the first network includes but is not limited to at least one of a port number of the first network for sending the first IP address acquiring message, a media access control (MAC) address of the first network and a MAC address and a virtual local area network (VLAN) identifier of the first network. This embodiment does not set a limitation thereto.

102. The network access device creates a first session for the first network by using a process, where the creating the first session includes assigning a first IP address to the first network and associating the identifier of the first network with the first session.

103. The network access device maps the first IP address to a first private network IP address.

In specific implementation of the embodiment of the present invention, the first IP address is normally used as a public network address of the first network, while which assigned by the network access device to the first network is a private network IP address; therefore, the network access device may map the first IP address to the first private network IP address by network address translation (NAT).

104. The network access device sends the first private network IP address to the first network.

The network access device, as an execution entity, of steps 101 to 104 may be a digital subscriber line access multiplexer (DSLAM), a bridge router (BR), or an optical line terminal (OLT).

Alternatively, the creating, by the network access device, the first session may further include initiating, by the network access device, a first IPoE dial-up to a BRAS or a DHCP server, and acquiring the first IP address assigned by the BRAS or the DHCP server.

Specifically, the initiating, by the network access device, the first IPoE dial-up to the BRAS or the DHCP server may specifically include:

Firstly, the network access device broadcasts a DHCP Discover packet corresponding to the first session, and updates the IPoE dial-up state corresponding to the first session, where the dial-up state corresponding to the session is waiting for a DHCP Offer packet. The BRAS or the DHCP server assigns an IP address to the network corresponding to the first session according to the DHCP Discover packet, and sends the DHCP Offer packet corresponding to the first session to the network access device, where the DHCP Offer packet includes the IP address assigned to the network corresponding to the first session.

Secondly, the network access device determines a corresponding session according to information of the received DHCP Offer packet (such as a destination port number, a MAC address, or a destination port MAC address and VLAN identifier in the DHCP Offer packet), and obtains the IPoE dial-up state of the session.

Thirdly, the network access device broadcasts a DHCP Request packet corresponding to the first session, where the DHCP Request packet includes the IP address selected by the network access device for the network corresponding to the first session, and updates IPoE dial-up states corresponding to each session according to the IPoE dial-up state of the first session obtained. The dial-up state corresponding to the session is waiting for a DHCP Acknowledgement (ACK) packet. The BRAS or the DHCP server verifies that the IP address contained in the DHCP Request packet is the IP address assigned by the BRAS or the DHCP server according to the DHCP Request packet, and sends a DHCP ACK packet to the network access device, where the DHCP ACK packet contains the IP address of the network corresponding to the first session.

Finally, the network access device confirms the corresponding session according to information of the received DHCP ACK packet (such as a destination port number, a MAC address, or a destination port MAC address and VLAN identifier in the DHCP ACK packet), and obtains the IPoE dial-up state of the session.

So far, the network access device obtains the IP address assigned by the BRAS or the DHCP server to the network corresponding to the first session.

Alternatively, the network access device may specifically create a session table, and record a mapping relationship between the identifier of the first network and the first session in the session table to associate the identifier of the first network with the first session.

For example, the network access device may use the process to search the session table according to the identifier of the first network to obtain the state of the first IPoE dial-up corresponding to the first session; then the network access device uses the process to interact packets based on DHCP with the BRAS or the DHCP server according to the state of the first IPoE dial-up corresponding to the first session, thereby acquiring the first IP address assigned by the BRAS or the DHCP server to the first session.

For example, the network access device may use the process to search the session table according to the identifier of the first network to obtain the state of the first IPoE dial-up corresponding to the first session; then the network access device collects statistics on IPoE dial-ups according to the state of the first IPoE dial-up for performing IPoE dial-up management, thereby avoiding the problem of collecting statistics on IPoE dial-ups by using multiple processes in the prior art.

Alternatively, in this embodiment, the network access device may further create the process upon startup, or may further create the process when the first IP address acquiring message is received. This embodiment sets no limit thereto.

In this embodiment, the network access device, after receiving the first IP address acquiring message which includes the identifier of the first network from the first network, assigns the first IP address by using the process to the first network and associates the identifier of the first network with the first session, so that the network access device is capable of mapping the first IP address to the first private network IP address and sending the first private network IP address to the first network, thereby avoiding the problem of complex implementation in the prior art resulted from a process where a gateway configured for a family network or an enterprise network needs to initiate an IPoE dial-up process. In this way, the gateway configured for the family network or the enterprise network is simplified, operation and maintenance costs are reduced, and flat networks are further implemented.

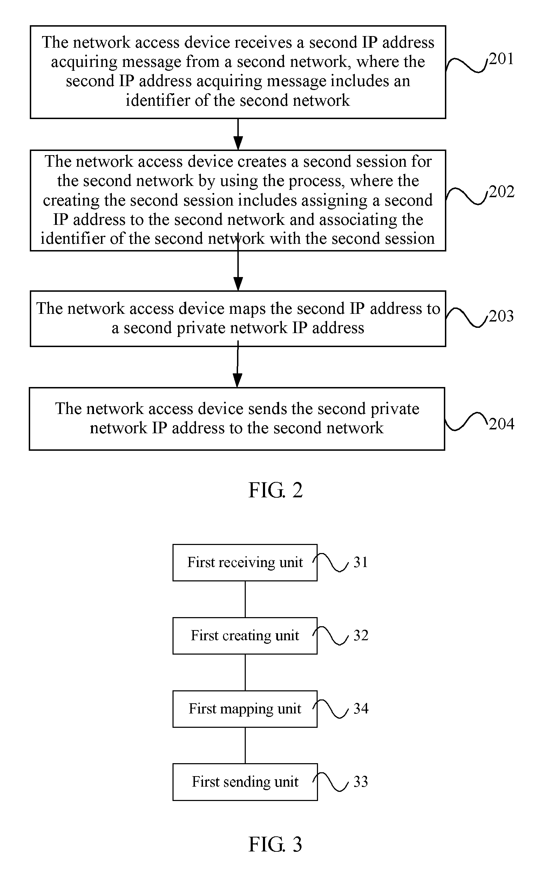

FIG. 2 is a schematic flowchart of a method for acquiring an IP address according to another embodiment of the present invention. As shown in FIG. 2, compared with the embodiment corresponding to FIG. 1, the method for acquiring an IP address according to this embodiment may further include:
201. The network access device receives a second IP address acquiring message from a second network, where the second IP address acquiring message includes an identifier of the second network.
202. The network access device creates a second session for the second network by using the process, where the creating the second session includes assigning a second IP address to the second network and associating the identifier of the second network with the second session.
203. The network access device maps the second IP address to a second private network IP address.
204. The network access device sends the second private network IP address to the second network.

Specifically, for the detailed description of 201 to 204 in this embodiment, refer to the relevant content of 101 to 104 of the embodiment corresponding to FIG. 1, which will not be described repeatedly here.

Alternatively, the BR in this embodiment may further delete a session created for a network.

Alternatively, to further save timer resources, in the method for acquiring an IP address provided by this embodiment, the network access device may further perform at least one of the following:
managing validity of the first IP address and the second IP address by using a first timeout timer according to validity periods of the IP addresses and effect time of the IP addresses in a round robin manner; and
managing validity of the first session and the second session by using a second timeout timer in a round robin manner.

In the prior art, to implement flat networks, multiple virtual machines are run on the network access device such as the DSLAM, BR, or OLT to respectively initiate an IPoE dial-up process to the BRAS or the DHCP server for each family network or enterprise network, thereby acquiring the IP address of the family network or the enterprise network. However, because each virtual machine occupies separate processing resources such as memory resources and CPU resources, the number of virtual machines is limited by processing resources of the network access device, so that the number of family networks or enterprise networks to be served is limited, thereby decreasing the expandability of the network.

In this embodiment, the network access device uses one process to create at least one session for at least one family network and enterprise network, so that an IPoE dial-up is initiated to the BRAS or the DHCP server in each session, and obtain the IP address assigned by the BRAS or the DHCP server to the network corresponding to each session. Because one process is used to create multiple sessions, where each session may share processing resources such as memory resources and CPU resources corresponding to the process, the number of sessions is not limited by the processing resources of the network access device, thereby avoiding the problem of a limited number of family networks or enterprise networks to be served because the number of virtual machines is limited by the processing resources of the network access device in the prior art, and increasing the expandability of the network.

Alternatively, to further save timer resources, the BR may further manage validity of the obtained IP address assigned to the network corresponding to each session according to at least one first timeout timer. For example, the BR may manage validity of IP addresses of networks corresponding to four sessions created thereby, namely session A, session B, session C, and session in a round robin manner.

Alternatively, to further save timer resources, the BR may further manage time for processing session packets in each session obtained according to at least one second timeout timer. For example, the BR may manage time for processing session packets (such as DHCP Discover packets, DHCP Offer packets, DHCP Request packets, or DHCP ACK packets) of four sessions created thereby, namely, a session A, a session B, a session C, and a session D in a round-robin manner.

In this embodiment, the BR uses one process to create four sessions for a family network A, a family network B, an enterprise network C, and an enterprise network D, so as to initiate an IPoE dial-up to the BRAS in each session, and obtain the IP address assigned by the BRAS to the network corresponding to each session. Because one process is used to create multiple sessions, where each session may share processing resources such as memory resources and CPU resources corresponding to the process, the number of sessions is not limited by the processing resources of the network access device, thereby avoiding the problem of a limited number of family networks or enterprise networks to be served because the number of virtual machines is limited by the processing resources of the network access device in the prior art, and increasing the scalability of the network.

It should be noted that, for a brief description, the above method embodiments are described as a combination of a series of actions; however, persons skilled in the art should understand that the present invention is not limited by the sequence of the actions described above and some steps may be performed in other sequences or simultaneously according to the present invention. In addition, persons skilled in the art should also understand that the embodiments described in the specification are exemplary embodiments, and the actions and modules involved therein are not necessarily required for the present invention.

In the above embodiments, description focuses on their major aspects, and what is not described in detail in any one embodiment may be referred to relevant description of other embodiments.

FIG. 3 is a schematic structural diagram of an IP address acquiring device according to another embodiment of the present invention. As shown in FIG. 3, the device for acquiring an IP address according to this embodiment may include a first receiving unit 31, a first creating unit 32, a first mapping unit 34, and a first sending unit 33. The first receiving unit 31 is configured to receive a first IP address acquiring message from a first network, where the first IP address acquiring message includes an identifier of the first network; the first creating unit 32 is configured to create a first session for the first network by using a process, where the creating the first session includes assigning a first IP address to the first network and associating the identifier of the first network with the first session; the first mapping unit 34 is configured to map the first IP address to a first private network IP address; and the first sending unit 33 is configured to send the first private network IP address to the first network.

Specifically, the identifier of the first network includes but is not limited to at least one of a port number of the first network for sending the first IP address acquiring message, a MAC address of the first network, and a MAC address and VLAN identifier of the first network. This embodiment sets no limit thereto.

The functions of the network access devices in the embodiments corresponding to FIG. 1 and FIG. 2 may be implemented by the IP address acquiring device provided in this embodiment.

In this embodiment, after the network access device receives the first IP address acquiring message from the first network by using the first receiving unit, the first creating unit assigns the first IP address to the first network by using the process and associates the identifier of the first network with the first session, so that the first mapping unit is capable of mapping the first IP address to the first private network IP address and the first sending unit is capable of sending the first private network IP address to the first network, thereby avoiding the problem of complex implementation in the prior art resulted from a process where a gateway configured for a family network or an enterprise network needs to initiate an IPoE dial-up process. In this way, the gateway configured for the family network or the enterprise network is simplified, operation and maintenance costs are reduced, and flat networks are further implemented.

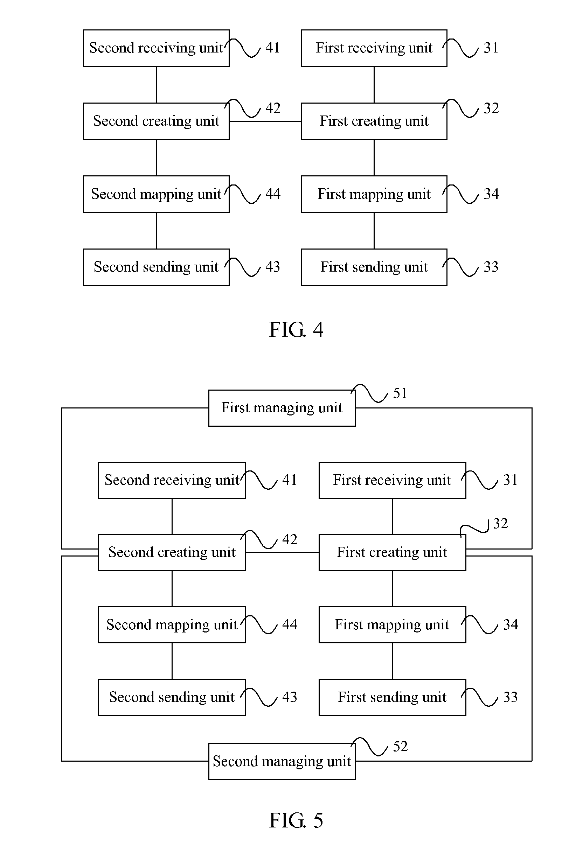

Alternatively, as shown in FIG. 4, the IP address acquiring device according to this embodiment may further include a second receiving unit 41, a second creating unit 42, a second mapping unit 44, and a second sending unit 43. The second receiving unit 41 is configured to receive a second IP address acquiring message from a second network, where the second IP address acquiring message includes an identifier of the second network; the second creating unit 42 is configured to create a second session for the second network by using the process, where the creating the second session includes assigning a second IP address to the second network and associating the identifier of the second network with the second session; the second mapping unit 44 is configured to map the second IP address to a second private network IP address; and the second sending unit 43 is configured to send the second private network IP address to the second network.

Alternatively, as shown in FIG. 5, the IP address acquiring device according to this embodiment may further include at least one of the following units:
a first managing unit 51 configured to manage validity of the first IP address and the second IP address by using a first timeout timer according to validity periods of the IP addresses and effect time of the IP addresses in a round robin manner; and
a second managing unit 52 configured to manage validity of the first session and the second session by using a second timeout timer in a round robin manner.

It should be noted that FIG. 5 merely shows the case in which the first managing unit 51 and the second managing unit 52 both are included; in alternative embodiments, only one of the two units may be included.

Alternatively, the first creating unit 32 of this embodiment may be further configured to initiate a first IPoE dial-up to the BRAS or the DHCP server, and obtain the first IP address assigned by the BRAS or the DHCP server.

Specifically, the first creating unit 32 of this embodiment is specifically configured to create a session table, and record a mapping relationship between the identifier of the first network and the first session in the session table. For example, the first creating unit 32 may use the process to search the session table according to the identifier of the first network, and obtain the state of the first IPoE dial-up corresponding to the first session, interact DHCP-based packets with the BRAS or the DHCP server by using the state of the first IPoE dial-up corresponding to the first network, and obtain the first IP address assigned by the BRAS or the DHCP server to the first session. For another example, the first creating unit 32 may use the process to search the session table according to the identifier of the first network, obtain the state of the first IPoE dial-up corresponding to the first session, and collect statistics on IPoE dial-ups according to the state of the first dial-up corresponding to the first session.

Alternatively, the first creating unit 32 in this embodiment may further create the process when the network access device starts, or create the process when the first receiving unit receives the first private network IP address.

In this embodiment, the network access device uses one process to create at least one session for at least one family network and enterprise network, so as to initiate an IPoE dial-up to the BRAS or the DHCP server in each session, and obtain the IP address assigned by the BRAS or the DHCP server to the network corresponding to each session. Because one process is used to create multiple sessions, where each session may share processing resources such as memory resources and CPU resources corresponding to the process, the number of sessions is not limited by the processing resources of the network access device, thereby avoiding the problem of a limited number of family networks or enterprise networks to be served because the number of virtual machines is limited by the processing resources of the network access device in the prior art, and increasing the expandability of the network.

Persons skilled in the art should clearly understand that, for the convenience and brevity of description, the specific operation processes of the above systems, apparatuses, and units may be referred to the corresponding processes in the method embodiments, and will not be described repeatedly here.

In the embodiments provided by the present application, it should be understood that the systems, apparatuses, and methods disclosed may be implemented in other forms. For example, the apparatus embodiments described above are merely illustrative. For example, the division of units is merely logical functional division, and there are other division forms in real application. For example, multiple units or components may be combined or be integrated to another system, or some features may be ignored or not be executed. In another aspect, the coupling, direct coupling, or communication connection there between which is displayed or discussed may be indirect coupling or communication connection of interfaces, apparatuses, or units, and may be electrical, mechanical, or in other forms.

The units described as separate components may be or may be not physically separate, and the components displayed as units may be or may be not physical units, and may be located in one place or be distributed on multiple network units. Part or all units may be selected depending on the actual requirements to realize the objectives of the solutions according to the embodiments.

In addition, the functional units in embodiments of the present invention may be integrated in one processing unit, or exist separately as physical units, also two or more units can be integrated in one unit. The integrated unit may be implemented by hardware or by hardware with software functional units.

The integrated unit implemented by software functional units may be stored in a computer readable storage medium. The software functional units are stored in a storage medium and includes a plurality of instructions, when being executed, to enable computer equipment (a personal computer, a server, or network device) to execute some steps of the method described in embodiments of the present invention. The storage medium includes various media which is capable of storing program codes, such as a universal series bus (USB) flash drive, a mobile hard disk, a read-only memory (ROM), a random access memory (RAM), a magnetic disk, or a compact disc-read only memory (CD-ROM).

Finally, it should be noted that the above embodiments are merely provided for describing the technical solutions of the present invention, but not intended to limit the present invention. It should be understood by persons skilled in the art that although the present invention has been described in detail with reference to the embodiments, modifications may be made to the technical solutions disclosed in the embodiments, or equivalent replacements may be made to some technical features in the technical solutions. However, such modification or replacement does not indicate that the essence of corresponding technical solutions goes beyond the spirit and scope of the technical solutions according to the embodiments of the present invention.

## Claims

1. A method for acquiring an Internet Protocol (IP) address, comprising:
receiving, by a network access device, a first IP address acquiring message from a first network, wherein the request message for acquiring the first IP address comprises an identifier of the first network;
creating, by the network access device, a first session for the first network by using a process, wherein the creating the first session comprises assigning a first IP address to the first network and associating the identifier of the first network with the first session;
mapping, by the network access device, the first IP address to a first private network IP address; and
sending, by the network access device, the first private network IP address to the first network.

2. The method according to claim 1, further comprising:
receiving, by the network access device, a second IP address acquiring message from a second network, wherein the second IP address acquiring message comprises an identifier of the second network;
creating, by the network access device, a second session by using the process for the second network, wherein the creating the second session comprises assigning a second IP address to the second network and associating the identifier of the second network with the second session;
mapping, by the network access device, the second IP address to a second private network IP address; and
sending, by the network access device, the second private network IP address to the second network.

3. The method according to claim 2, further comprising any one of:
managing, by the network access device, validity of the first IP address and the second IP address by using a first timeout timer according to validity periods of the IP addresses and effect time of the IP addresses in a round-robin manner; and
managing, by the network access device, validity of the first session and the second session by using a second timeout timer in a round-robin manner.

4. The method according to any one of claims 1 to 3, wherein the creating, by the network access device, the first session further comprises:
initiating, by the network access device, a first IP over Ethernet (IPoE) dial-up to a broadband remote access server (BRAS) or a Dynamic Host Configuration Protocol (DHCP) server, and acquiring the first IP address assigned by the BRAS or the DHCP server.

5. The method according to any one of claims 1 to 4, wherein the associating, by the network access device, the identifier of the first network with the first session specifically comprises:
creating, by the network access device, a session table, and recording a mapping relationship between the identifier of the first network and the first session in the session table.

6. The method according to claim 5, wherein the initiating, by the network access device, the first IPoE dial-up to the BRAS or the DHCP server, and the acquiring the first IP address assigned by the BRAS or the DHCP server specifically comprise:
searching, by the network access device, the session table according to the identifier of the first network by using the process, and acquiring a state of the first IPoE dial-up corresponding to the first session; and
interacting, by the network access device, DHCP-based packets with the BRAS or the DHCP server by using the process according to the state of the first IPoE dial-up corresponding to the first session, and acquiring the first IP address assigned by the BRAS or the DHCP server to the first session.

7. The method according to claim 6, wherein after the searching, by the network access device, the session table according to the identifier of the first network by using the process, and the acquiring the state of the first IPoE dial-up corresponding to the first session, the method further comprises:
collecting statistics on IPoE dial-ups according to the state of the first IPoE dial-up corresponding to the first session.

8. The method according to any one of claims 1 to 7, wherein the identifier of the first network comprises at least one of a port number of the first network for sending the request message for acquiring the first IP address, a media access control (MAC) address of the first network, and a MAC address and virtual local area network (VLAN) identifier of the first network.

9. The method according to any one of claims 1 to 8, further comprising:
creating, by the network access device, the process upon startup.

10. The method according to any one of claims 1 to 8, further comprising:
creating, by the network access device, the process when the first IP address acquiring message is received.

11. A network access device, comprising:
a first receiving unit, configured to receive a first IP address acquiring message from a first network, wherein the first IP address acquiring message comprises an identifier of the first network;
a first creating unit, configured to create a first session for the first network by using a process, wherein the creating the first session comprises assigning a first IP address to the first network and associating the identifier of the first network with the first session;
a first mapping unit, configured to map the first IP address to a first private network IP address; and
a first sending unit, configured to send the first private network IP address to the first network.

12. The network access device according to claim 11, further comprising:
a second receiving unit, configured to receive a second IP address acquiring message from a second network, wherein the second IP address acquiring message comprises an identifier of the second network;
a second creating unit, configured to create a second session for the second network by using the process, wherein the creating the second session comprises assigning a second IP address to the second network and associating the identifier of the second network with the second session;
a second mapping unit, configured to map the second IP address to a second private network IP address; and
a second sending unit, configured to send the second private network IP address to the second network.

13. The network access device according to claim 12, further comprising at least one of the following units:
a first managing unit, configured to manage validity of the first IP address and the second IP address by using a first timeout timer according to validity periods of the IP addresses and effect time of the IP addresses in a round robin manner; and
a second managing unit configured to manage validity of the first session and the second session by using a second timeout timer in a round-robin manner.

14. The network access device according to any one of claims 11 to 13, wherein the first creating unit is further configured to:
initiate a first IP over Ethernet (IPoE) dial-up to a broadband remote access server (BRAS) or a Dynamic Host Configuration Protocol (DHCP) server, and obtain the first IP address assigned by the BRAS or the DHCP server.

15. The network access device according to any one of claims 11 to 14, wherein the first creating unit is specifically configured to:
create a session table, and record a mapping relationship between the identifier of the first network and the first session in the session table.

16. The network access device according to claim 15, wherein the first creating unit is specifically configured to:
search the session table according to the identifier of the first network by using the process, and obtain a state of the first IPoE dial-up corresponding to the first session; and
interact DHCP-based packets with the BRAS or the DHCP server by using the process according to the state of the first IPoE dial-up corresponding to the first session, and obtain the first IP address assigned by the BRAS or the DHCP server to the first session.

17. The network access device according to claim 16, wherein the first creating unit is specifically configured to:
collect statistics on IPoE dial-ups according to the state of the first IPoE dial-up corresponding to the first session.

18. The network access device according to any one of claims 11 to 17, wherein the identifier of the first network comprises at least one of a port number of the first network for sending the request message for acquiring the first IP address, a MAC address of the first network, and a MAC address and VLAN identifier of the first network.

19. The network access device according to any one of claims 11 to 18, wherein the first creating unit is further configured to:
create the process when the network access device starts.

20. The network access device according to any one of claims 11 to 18, wherein the first creating unit is further configured to:
create the process when the first receiving unit receives the first IP address acquiring message.
